# EUROPÄISCHE PATENTSCHRIFT

(11) **EP 2 914 874 B1**
(45) Veröffentlichungstag und Bekanntmachung des Hinweises auf die Patenterteilung: **05.06.2019**
(21) Anmeldenummer: 13782659.0
(22) Anmeldetag: 23.10.2013
(51) Int. Cl.: F16H 3/00, F16H 37/04, B60K 17/346

(54) **DOPPELKUPPLUNGSGETRIEBE**
DOUBLE CLUTCH TRANSMISSION
TRANSMISSION À DOUBLE EMBRAYAGE

(30) Priorität: 30.10.2012 DE 102012021599
(43) Veröffentlichungstag der Anmeldung: 09.09.2015
(73) Patentinhaber: Audi AG, 85045 Ingolstadt (DE)
(72) Erfinder: MÄRKL, Johann, 86633 Neuburg a. d. Donau (DE); HEITMANN, Axel, 71229 Leonberg (DE); HUMMEL, Steffen, 85055 Ingolstadt (DE); VOLLMER, Frank, 85049 Ingolstadt (DE)
(74) Vertreter: Lehle, Josef
(86) Internationale Anmeldenummer: PCT/EP2013/003184
(87) Internationale Veröffentlichungsnummer: WO 2014/067632

(56) Entgegenhaltungen:
- EP-A1- 0 797 025
- DE-A1- 3 546 454
- DE-A1-102006 015 661
- DE-A1-102008 001 200
- DE-A1-102008 054 477
- JP-A- 2002 364 718

## Beschreibung

Die vorliegende Erfindung betrifft ein Doppelkupplungsgetriebe als Geschwindigkeits-Wechselgetriebe für Kraftfahrzeuge gemäß dem Oberbegriff des Patentanspruchs 1.

Derartige Doppelkupplungsgetriebe sind bei einem guten Getriebewirkungsgrad als automatisierte Schaltgetriebe einsetzbar, die zudem durch die Aufteilung auf zwei Teilgetriebe und zwei Trennkupplungen schnell und ohne Unterbrechung der Zugkraft schaltbar sind. In dem Bestreben, derartige Wechselgetriebe optimal an die Antriebsleistungen der Antriebsaggregate bzw. von Brennkraftmaschinen anzupassen, ist eine große Getriebespreizung erwünscht, die zum Beispiel durch das Vorsehen vermehrter Vorwärtsgänge (bei nicht zu großen Übersetzungssprüngen) realisiert werden kann.

Aus der DE 35 46 454 A1 ist ein gattungsgemäßes Doppelkupplungsgetriebe bekannt, das eine Zentralwelle zum Antrieb einer ersten Gruppe von Getriebegängen und einer kürzeren, zur Zentralwelle konzentrischen, von einer zweiten Kupplungsscheibe ausgehenden Hohlwelle zum Antrieb einer zweiten Gruppe von Getriebegängen aufweist. Aus der JP 2002 36 47 18 A ist ein Sechs-Gang-Doppelkupplungsgetriebe bekannt, bei der die Anzahl der Rückwärtsgänge durch Verwendung eines Planetengetriebes erhöht ist. Aus der EP 0 797 025 A1 ist ein Doppelkupplungsgetriebe bekannt, das zwei Teilgetriebe aufweist. Jedem Teilgetriebe ist eine Vorwärts-/Rückwärts-Gruppe und eine Zweiganggruppe vorgeschaltet.

Aufgabe der Erfindung ist es, ein Doppelkupplungsgetriebe der gattungsgemäßen Art anzugeben, das bei einer baulich kompakten Konstruktion eine große Getriebespreizung und eine insbesondere erhöhte Anzahl von Vorwärtsgängen ermöglicht und das steuerungstechnisch gut beherrschbar ist.

Die Lösung dieser Aufgabe ist in den Merkmalen des Patentanspruchs 1 angeführt. Vorteilhafte Ausgestaltungen und Weiterbildungen der Erfindung geben die abhängigen Ansprüche an.

Erfindungsgemäß wird vorgeschlagen, dass dem Teilgetriebe A mit der Eingangs-Hohlwelle ein in zwei Übersetzungsstufen umschaltbares Planetengetriebe vorgeschaltet ist. Das Planetengetriebe bewirkt im Teilgetriebe A eine Verdoppelung der Gänge, wodurch im Teilgetriebe B trotz der verwirklichbaren, größeren Getriebespreizung die Anzahl der Zahnradsätze gegenüber einem konventionellen Radsatz verringert werden kann, so dass letztendlich die Baulänge des Getriebes nicht vergrößert ist und der Mehraufwand gering gehalten werden kann. Die im Teilgetriebe A realisierten Vorwärtsgänge können je Zahnradsatz in zwei unterschiedlichen Übersetzungen gefahren werden, wobei auch die Umschaltung relativ einfach und automatisiert erfolgen kann. Die Vorwärtsgänge im Teilgetriebe B werden dabei so zugeordnet, dass die zugkraftfreie (unterbrechungsfreie) Umschaltung der Gänge gewahrt bleibt.

Alternativ zum oben erwähnten Planetengetriebe ist allgemein jede andere, dem Teilgetriebe A vor- oder nachgeschaltete Schalteinheit von der Erfindung umfasst, die in zwei Übersetzungsstufen umschaltbar ist. Nachfolgend wird sich jedoch zur Veranschaulichung der Funktionsweise der Erfindung speziell auf die Ausbildung der Schalteinheit als ein vorgeschaltetes Planetengetriebe bezogen.

Das Planetengetriebe weist in an sich bekannter Weise ein Eingangselement, ein Ausgangselement und ein über eine Bremse festsetzbares Übertragungselement zum Schalten der niedrigeren oder höheren Übersetzungsstufe auf. Über eine separate Kupplung wird ferner in die höhere 1:1-Übersetzungsstufe umgeschaltet, wobei die Kupplung zwei Elemente des Planetengetriebes miteinander verbindet, so dass in der 1:1-Übersetzung keine Übertragungsverluste auftreten. Die Bremse und die Kupplung sind bevorzugt hydraulisch betätigbare, reibschlüssig wirkende Elemente zum Beispiel der Lamellenbauart.

In einer vorteilhaften Ausgestaltung der Erfindung kann das Eingangselement des Planetengetriebes ein Hohlrad und das Ausgangselement ein Planetenräder tragender Steg sein, während das Übertragungselement ein mit den Planetenrädern kämmendes Sonnenrad ist, das über eine Bremse festsetzbar oder über die separate Kupplung mit einem der anderen Elemente des Planetengetriebes verbindbar ist. Hier bleibt der Anfahrvorgang in an sich üblicher Weise bei der Kupplung K1, während über die Bremse das Sonnenrad zur Übertragung des Antriebsmoments abgestützt bzw. festgebremst ist.

Die separate Kupplung, zum Beispiel eine Lamellenkupplung, kann baulich günstig zwischen dem antreibenden Hohlrad und dem Sonnenrad vorgesehen sein; ferner können die Bremse und die separate Kupplung auf einer gemeinsamen Hohlwelle mit dem Sonnenrad angeordnet sein.

In einer weiteren, vorteilhaften Ausgestaltung der Erfindung kann das Planetengetriebe als Minusgetriebe (Standübersetzung zum Beispiel i₀ = -3) ausgelegt sein, wodurch insbesondere in der Reduzierstufe der Anteil an Kupplungsleistung bzw. der Übertragungs-Wirkungsgrad weiter verbesserbar ist.

In einer weiteren, bevorzugten Auslegung der Erfindung kann das Wechselgetriebe zumindest acht Vorwärtsgänge aufweisen, von denen der erste und zweite Vorwärtsgang, der vierte und fünfte Vorwärtsgang und der siebte und achte Vorwärtsgang dem Teilgetriebe A mit dem vorgeschalteten Planetengetriebe und der dritte und sechste Vorwärtsgang dem Teilgetriebe B zugeordnet sind. Die acht Vorwärtsgänge sind somit nur durch fünf, statt durch acht Zahnradsätze realisierbar, wobei die Vorwärtsgänge der drei Zahnradsätze des Teilgetriebes A über das umschaltbare Planetengetriebe verdoppelt sind.

In einer alternativen Schaltfolge kann der zweite und dritte Vorwärtsgang (2/3), der fünfte und sechste Vorwärtsgang (5/6) und der achte und neunte Vorwärtsgang (8/9) dem Teilgetriebe A mit der vor- oder nachgeschalteten Schalteinheit (60) zugeordnet sein. Der erste, vierte und siebte Vorwärtsgang (1/4/7) können dagegen dem Teilgetriebe B zugeordnet sein. Damit ist der Gangsprung 1/2 unabhängig von der Vorschaltgruppe.

Bei einem Wechselgetriebe mit mehr als acht Vorwärtsgängen kann zudem dem Teilgetriebe B über einen weiteren Zahnradsatz der neunte Vorwärtsgang und gegebenenfalls dem Teilgetriebe A ebenfalls über einen weiteren Zahnradsatz die Vorwärtsgänge 10 und 11 zugeordnet sein.

Schließlich kann dem Teilgetriebe A mit dem vorgeschalteten Planetengetriebe ein Zahnradsatz mit einem Zwischenzahnrad zur Darstellung von zwei Rückwärtsgängen zugeordnet sein; alternativ kann der Zahnradsatz mit Zwischenzahnrad zur Bildung nur eines Rückwärtsganges im Teilgetriebe B angeordnet sein. Letzteres hat den Vorteil, dass die Anfahrgänge (vorwärts - rückwärts) nicht über das gleiche Anfahrelement gesteuert werden und damit gegebenenfalls ungleicher Kupplungsverschleiß vermieden ist.

Mehrere Ausführungsbeispiele der Erfindung sind im Folgenden anhand der beiliegenden, schematischen Zeichnung näher erläutert. Es zeigen:
- Fig. 1: ein Blockschaltbild eines Doppelkupplungsgetriebes für ein Allrad getriebenes Kraftfahrzeug, mit zwei Teilgetrieben A und B, wobei dem Teilgetriebe A ein Planetengetriebe vorgeschaltet ist;
- Fig. 2 und 3: jeweils eine Schaltungsmatrix mit Darstellung der Schaltfolgen für ein Doppelkupplungsgetriebe mit acht Vorwärtsgängen;
- Fig. 4: und 5 jeweils in einer Ansicht entsprechend der Fig. 2 eine Schaltungsmatrix eines Doppelkupplungsgetriebes mit elf Vorwärtsgängen;
- Fig. 6: und 7 jeweils eine alternative Schaltungsmatrix eines Doppelkupplungsgetriebes mit neun Vorwärtsgängen;
- Fig. 8: in einer Ansicht entsprechend Fig. 1 ein weiteres Ausführungsbeispiel eines Doppelkupplungsgetriebes mit acht Vorwärtsgängen und einem Rückwärtsgang bei nur drei Schaltgruppen; und
- Fig. 9: in einer Ansicht entsprechend Fig. 1 ein weiteres Ausführungsbeispiel eines Doppelkupplungsgetriebes mit elf Vorwärtsgängen und zwei Rückwärtsgängen.

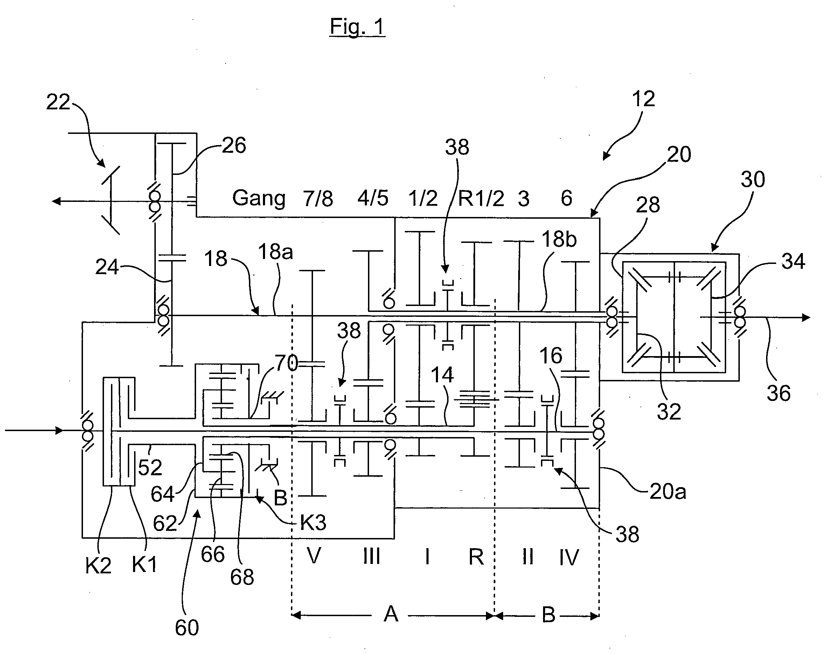

Die Fig. 1 zeigt grob schematisch ein Doppelkupplungsgetriebe 12 als Geschwindigkeits-Wechselgetriebe für Kraftfahrzeuge, mit zwei koaxialen Getriebe-Eingangswellen 14, 16, die über zwei Trennkupplungen K1, K2 mit einem antreibenden Antriebsaggregat bzw. einer Brennkraftmaschine (nicht dargestellt) trieblich verbindbar sind. Die Eingangswelle 14 ist als Hohlwelle ausgeführt.

Achsparallel zu den Eingangswellen 14, 16 ist eine Abtriebswelle 18 vorgesehen, die sich im Ausführungsbeispiel aus einer ersten Ausgangswelle 18a und einer zweiten, als Hohlwelle ausgeführten, koaxialen Ausgangswelle 18b zusammensetzt.

Die erste Ausgangswelle 18a treibt über Stirnzahnräder 24, 26 auf ein an das Getriebegehäuse 20 angebautes Vorderachsdifferenzial 22 (nur angedeutet) ab, während die zweite Ausgangswelle 18b auf das Ausgleichsgehäuse 28 eines Zwischenachsdifferenziales 30 abtreibt, dessen Abtriebselemente bzw. Achskegelräder 32, 34 einerseits mit der Ausgangswelle 18a zum Antrieb des vorderen Achsdifferenzials 22 und andererseits mit einer Abtriebswelle 36 zum Antrieb eines hinteren Achsdifferenzials (nicht dargestellt) des Kraftfahrzeugs verbunden sind.

Die dargestellte Auslegung der Abtriebswelle 18 mit dem Zwischenachsdifferenzial 30 ermöglicht es, dass einzelne Vorwärtsgänge direkt auf das vordere Achsdifferenzial abtreiben, während andere Vorwärtsgänge und der Rückwärtsgang über das Zwischenachsdifferenzial 30 einen Allradantrieb darstellen.

Die Abtriebswelle 18 kann im Falle eines Abtriebs nur auf ein Achsdifferenzial 22 (Frontantrieb) oder über die Abtriebswelle 36 auf ein hinteres Achsdifferenzial (Heckantrieb) auch einteilig und ohne Zwischenachsdifferenzial 30 ausgeführt sein.

Die besagten Wellen 14, 16, 18, etc. sind über nur angedeutete Wälzlager in dem Getriebegehäuse 20 drehbar gelagert.

Das Doppelkupplungsgetriebe 12 ist in ein Teilgetriebe A und ein Teilgetriebe B unterteilt, wobei sich die Eingangs-Hohlwelle 14 nur innerhalb des Teilgetriebes A erstreckt, während die Eingangswelle 16 durch die Eingangswelle 14 hindurch in das Teilgetriebe B bis zu dessen Abschlusswand 20a geführt ist.

Im Teilgetriebe A sind drei Vorwärtsgang-Zahnradsätze I, III, V und ein Rückwärtsgang-Zahnradsatz R mit einem integrierten Umkehrzahnrad angeordnet, die sich in bekannter Weise aus Festzahnrädern und Loszahnrädern zusammensetzen, wobei die Loszahnräder über Synchronkupplungen (allgemein mit 38 bezeichnet) geschaltet werden können. Die Zahnradsätze I, III, V, R bilden die Vorwärtsgänge 1/2, 4/5, 7/8 und zwei Rückwärtsgänge R1/2 (wird noch erläutert).

Im Teilgetriebe B sind zwei Vorwärtsgang-Zahnradsätze II und IV vorgesehen, die sich ebenfalls aus Festzahnrädern und über eine Synchronkupplung 38 schaltbare Loszahnräder zusammensetzen und die in der entsprechenden Übersetzungsauslegung die Vorwärtsgänge 3 und 6 bilden.

Dem Teilgetriebe A ist benachbart der Doppelkupplung K1, K2 ein Planetengetriebe 60 vorgeschaltet, das koaxial zur Eingangs-Hohlwelle 14 ausgeführt ist und das in zwei Übersetzungsstufen bzw. in eine niedrigere/höhere Übersetzungsstufe und eine 1:1-Übersetzungsstufe umschaltbar ist.

Das an die Doppelkupplung K1, K2 angebaute Planetengetriebe 60 weist ein an die Kupplung K1 über die Hohlwelle 52 trieblich angeschlossenes Hohlrad 62 als Eingangselement, einen Steg 64 mit drehbar gelagerten Planetenrädern 66 als Ausgangselement und ein Sonnenrad 68 als Übertragungselement auf.

Der Steg 64 ist unmittelbar mit der Eingangs-Hohlwelle 14 des Teilgetriebes A trieblich verbunden, während das Sonnenrad 68 über eine weitere Hohlwelle 70 an die gehäusefeste Bremse B angeschlossen ist.

Des Weiteren ist zwischen dem Hohlrad 62 und der Hohlwelle 70 bzw. dem Sonnenrad 68 eine separate Lamellenkupplung K3 vorgesehen, die hydraulisch beaufschlagt das Hohlrad 62 mit dem Sonnenrad 68 verbindet und damit die 1:1-Übersetzung des Planetengetriebes 60 bildet. Die Kupplung K1 treibt dann über das blockierte Planetengetriebe 60 die Hohlwelle 14 des Teilgetriebes A an.

Die niedrigere Übersetzungsstufe ist im Planetengetriebe 60 geschaltet, wenn die Kupplung K1 geschlossen ist, die Kupplung K3 gelöst und die Bremse B betätigt ist. In diesem Fall treibt die geschlossene Kupplung K1 über das Hohlrad 62, die Planetenräder 66 und den Steg 64 die Eingangs-Hohlwelle 14 an, während das Sonnenrad 68 als Stützelement festgebremst ist. Wird die Bremse B gelöst, so ist die Antriebsleistung unterbrochen.

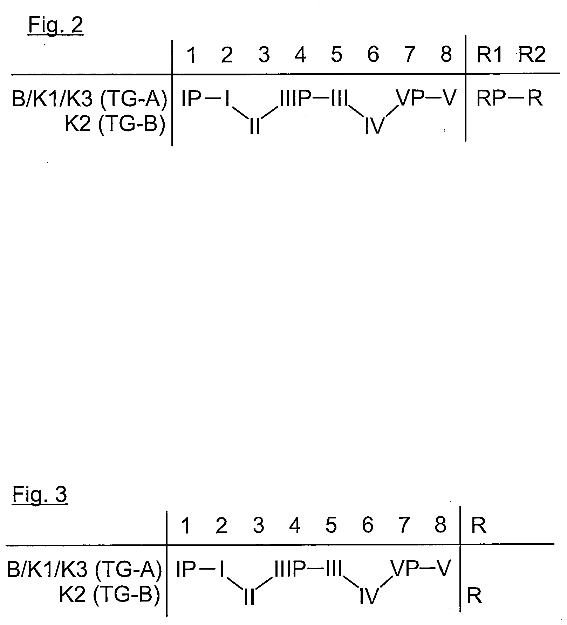

Zum Umschalten des Planetengetriebes 60 in die 1:1-Übersetzungsstufe bleibt die Kupplung K1 geschlossen, während die Bremse B gelöst und gleichzeitig die Kupplung K3 geschlossen wird. Dadurch ist das Hohlrad 62 (Eingangselement) und das Sonnenrad 68 (Übertragungselement) zusammengeschaltet und das Planetengetriebe 60 in sich blockiert. In der 1:1-Übersetzungsstufe des Planetengetriebes 60 können gemäß der Schaltungsmatrix der Fig. 2 die Vorwärtsgänge 2, 5, 8 und der Rückwärtsgang R geschaltet werden.

In der Fig. 1 wird das Anfahren des Kraftfahrzeugs nach dem Schließen der Bremse B über die Kupplung K1 gesteuert. Die Bremse B kann dementsprechend konstruktiv einfach und daher mit reduzierter Baugröße dimensioniert sein, da hier nur das Stützmoment zum Festbremsen des Sonnenrads 68 zu übertragen ist.

Zum Schalten der Vorwärtsgänge 3 und 6 des Teilgetriebes B werden in herkömmlicher Weise die Zahnradsätze II oder IV über die Synchronkupplung 38 geschaltet und über die Trennkupplung K2 aktiviert. Dabei sind die Kupplung K1, die Kupplung K3 und die Bremse B des Planetengetriebes 60 gelöst.

Die Schaltungsmatrix gemäß Fig. 2 zeigt die Schaltfolgen zum Beispiel beim Durchfahren der Vorwärtsgänge 1 bis 8 und der beiden möglichen Rückwärtsgänge R1 und R2.

Wird das Kraftfahrzeug im 1. Gang angefahren, so wird nach dem Kuppeln des Zahnradsatzes I mittels der Synchronkupplung 38 über die Bremse B das Antriebsmoment eingeleitet, wobei sich das Planetengetriebe 60 wie vorbeschrieben in der niedrigeren, zu höheren Ausgangsmomenten führenden Übersetzungsstufe befindet (dies ist jeweils angezeigt zum Beispiel mit IP; P steht jeweils für Planetengetriebe 60 aktiv).

Anschließend wird der 2. Gang geschaltet, indem die Bremse B gelöst und die Kupplung K3 geschlossen wird. Dies kann ohne jegliche Zugkraftunterbrechung gesteuert werden. In den bis jetzt beschriebenen Schaltvorgängen kann im Teilgetriebe B der 3. Gang bereits über die Synchronkupplung 38 vorab eingelegt werden.

Beim Schalten in den 3.Gang wird die Kupplung K1 geöffnet und ohne Unterbrechung der Zugkraft gleichzeitig die Kupplung K2 geschlossen.

Beim Fahren im 3. Gang kann im Teilgetriebe A der Zahnradsatz III für den 4. und 5.Gang über die Synchronkupplung 38 geschaltet werden. Das Aktivieren der Gänge 4 und 5 erfolgt dann analog zu den vorbeschriebenen Gängen 1 und 2 über die Bremse B (IIIP) und nachfolgend über die Kupplung K3 (III).

Gleiches gilt für den 6.Gang im Teilgetriebe B und die weiteren Gänge 7 und 8 im Teilgetriebe A.

Zum Schalten der Rückwärtsgänge über den Rückwärtsgang-Zahnradsatz R wird bei stehendem Kraftfahrzeug der Zahnradsatz R über die Synchronkupplung 38 geschaltet und sodann entweder die Bremse B betätigt (R1 bzw. RP) oder bei gelöster Bremse B die Kupplung K3 geschlossen (R2 bzw. R).

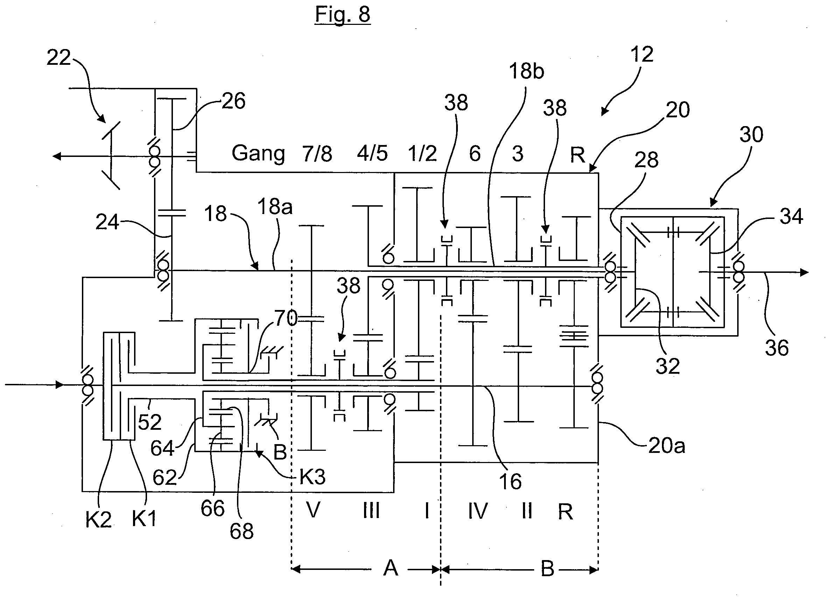

In der Fig. 3 ist eine weitere Schaltungsmatrix dargestellt, deren Schaltfolge beim Durchfahren der Vorwärtsgänge 1 bis 8 identisch mit der in der Fig. 2 dargestellten Schaltungsmatrix ist. Im Unterschied zur Fig. 2 betrifft die Schaltungsmatrix der Fig. 3 ein Doppelkupplungsgetriebe, bei dem der Rückwärtsgang-Zahnradsatz R nicht (wie in der Fig. 1) im Teilgetriebe A, sondern im Teilgetriebe B angeordnet ist. Entsprechend sind gemäß der Schaltungsmatrix der Fig. 3 nicht zwei, sondern nur ein Rückwärtsgang R schaltbar. Die in der Fig. 3 gezeigte Schaltungsmatrix kann durch ein Doppelkupplungsgetriebe realisiert sein, wie es in der Fig. 8 gezeigt und später beschrieben ist.

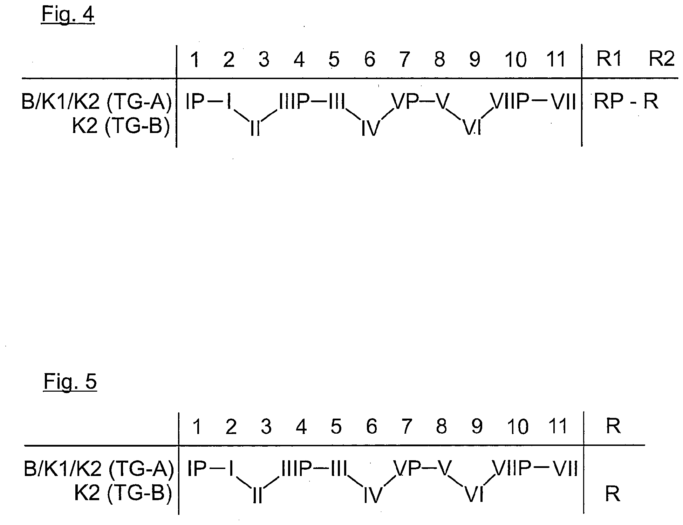

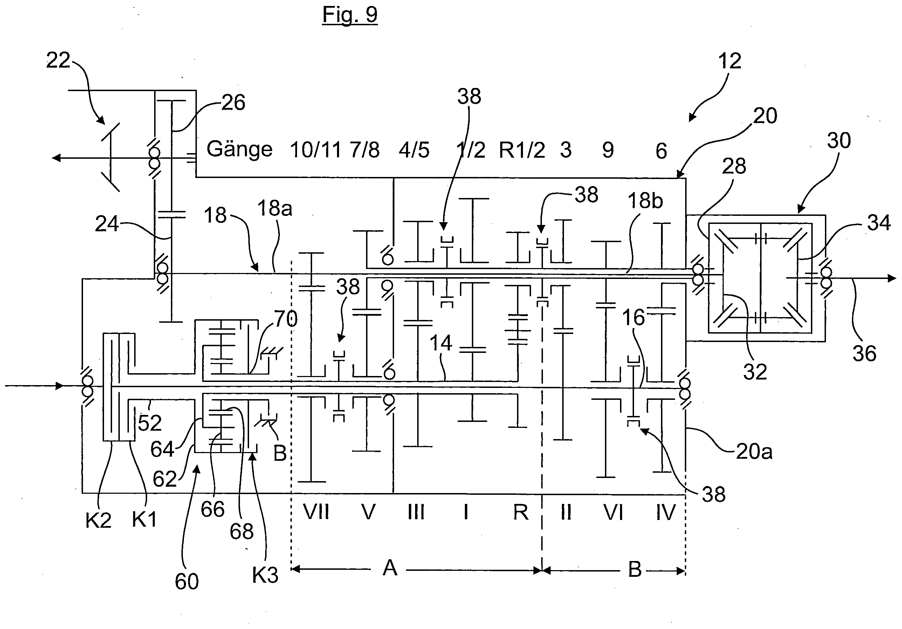

In der Fig. 4 ist eine weitere Schaltungsmatrix gezeigt, deren Schaltfolge bis zum 8. Gang identisch mit der in der Fig. 2 gezeigten Schaltfolge ist. Die Schaltungsmatrix weist in der Fig. 4 weitere Vorwärtsgänge 9 bis 11 auf, die nach dem vorbeschriebenen Schaltmuster geschaltet werden können. Die in der Fig. 4 gezeigte Schaltungsmatrix ist in einem Doppelkupplungsgetriebe realisierbar, wie es in der Fig. 9 gezeigt ist. Im Unterschied zur Fig. 1 ist in dem in der Fig. 9 gezeigten Teilgetriebe A, neben den Zahnradsätzen I, III, V und R, ein zusätzlicher Zahnradsatz VII vorgesehen. Dieser zusätzliche Zahnradsatz VII bildet in der entsprechenden Übersetzungsauslegung die Gänge 10 und 11. Zudem ist in dem in der Fig. 9 gezeigten Teilgetriebe B, neben den Zahnradsätzen II und IV (für den 3. und 6. Gang), noch ein Zahnradsatz VI für den 9. Gang vorgesehen.

In der in der Fig. 9 gezeigten Anordnung sind insgesamt vier Schaltgruppen, d.h. Synchronkupplungen 38, verbaut. Von diesen ist eine Synchronkupplung 38 vorgesehen, die zwischen dem, dem Teilgetriebe A zugeordneten Rückwärtsgang-Zahnradsatz R1/2 und dem, dem Teilgetriebe B zugeordneten Zahnradsatz II (für den 3. Gang) schaltbar ist.

In der Fig. 5 ist eine weitere Schaltungsmatrix gezeigt, deren Schaltfolge beim Durchfahren der Vorwärtsgänge 1 bis 11 identisch mit der in der Fig. 4 gezeigten Schaltfolge ist. Im Unterschied zur Fig. 4 betrifft jedoch die in der Fig. 5 gezeigte Schaltungsmatrix ein Doppelkupplungsgetriebe, bei der der Rückwärtsgang-Zahnradsatz nicht im Teilgetriebe A, sondern im Teilgetriebe B angeordnet ist. Entsprechend ist in der, in der Fig. 5 gezeigten Schaltungsmatrix nur ein einziger Rückwärtsgang R schaltbar.

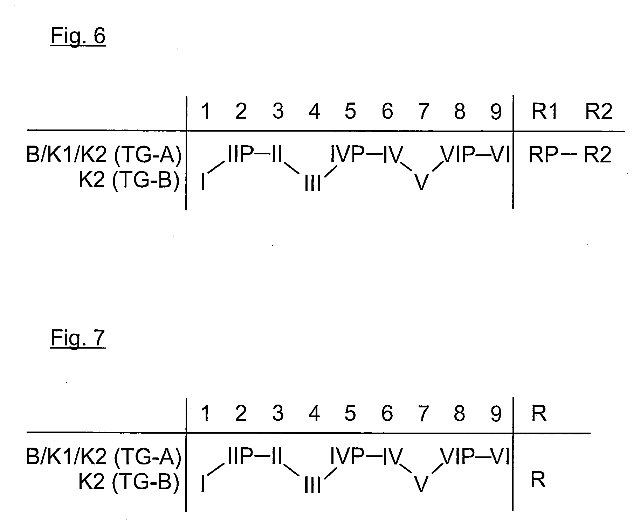

Anhand der in der Fig. 6 gezeigten Schaltungsmatrix ist eine alternative Schaltfolge veranschaulicht. Demzufolge sind im Wechselgetriebe 12 der erste, vierte und siebte Vorwärtsgang 1/4/7 dem Teilgetriebe B zugeordnet. Der zweite und dritte Vorwärtsgang 2/3, der fünfte und sechste Vorwärtsgang 5/6 sowie der achte und neunte Vorwärtsgang 8/9 sind dem Teilgetriebe A mit dem vorgeschalteten Planetengetriebe 60 zugeordnet.

Hier ist beim Anfahren des Kraftfahrzeugs im 1. Gang die das Teilgetriebe A antreibende Kupplung K1 geöffnet und die das Teilgetriebe B antreibende Kupplung K2 geschlossen. Im Teilgetriebe A kann bereits vorab der 2. Gang eingelegt sein. Anschließend kann der 2. Gang geschaltet werden, indem die Kupplung K2 gelöst wird und ohne Zugkraftunterbrechung die Kupplung K1 geschlossen wird, und zwar bei betätigter Bremse B und bei gelöster Kupplung K3. Anschließend kann der dritte Gang geschaltet werden, indem die Bremse B gelöst wird und gleichzeitig die Kupplung K3 geschlossen wird.

Beim Schalten in den 4. Gang wird abermals die Kupplung K1 geöffnet und ohne Unterbrechung der Zugkraft gleichzeitig die Kupplung K2 geschlossen. Die weiteren Gänge können in entsprechender Weise geschaltet werden.

In der Fig. 7 ist eine weitere Schaltungsmatrix gezeigt, deren Schaltfolge beim Durchfahren der Vorwärtsgänge 1 bis 9 identisch mit der in der Fig. 6 gezeigten Schaltfolge ist. Im Unterschied zur Fig. 6 betrifft jedoch die in der Fig. 7 gezeigte Schaltungsmatrix ein Doppelkupplungsgetriebe, bei dem der Rückwärtsgang-Zahnradsatz nicht im Teilgetriebe A, sondern im Teilgetriebe B angeordnet ist. Entsprechend ist in der, in der Fig. 7 gezeigten Schaltungsmatrix nur ein einziger Rückwärtsgang R schaltbar.

Das in der Fig. 8 gezeigte Doppelkupplungsgetriebe ist bezüglich Aufbau und Funktionsweise weitgehend baugleich mit dem in der Fig. 1 gezeigten Doppelkupplungsgetriebe. Insofern wird auf die Beschreibung des in der Fig. 1 gezeigten Doppelkupplungsgetriebes verwiesen.

Im Unterschied zur Fig. 1 sind in der Fig. 8 jedoch nur die drei Vorwärtsgang-Zahnradsätze I, III, V, nicht jedoch der Rückwärtsgang-Zahnradsatz R, im Teilgetriebe A angeordnet. Der Rückwärtsgang-Zahnradsatz R ist in der Fig. 8, zusammen mit den Vorwärtsgang-Zahnradsätzen II und IV, im Teilgetriebe B angeordnet. Entsprechend ist in dem Doppelkupplungsgetriebe der Fig. 8 - im Unterschied zur Fig. 1 - lediglich ein einziger Rückwärtsgang bereitgestellt.

Durch die in der Fig. 8 gezeigte Anordnung der Zahnradsätze ergibt sich der Vorteil, dass der erste Gang und der Rückwärtsgang R in unterschiedlichen Teilgetrieben A, B, das heißt an unterschiedlichen Kupplungen K1, K2, vorgesehen sind.

In der in der Fig. 8 gezeigten Anordnung sind insgesamt nur drei Schaltgruppen, d.h. Synchronkupplungen 38, verbaut. Von diesen ist eine Synchronkupplung 38 vorgesehen, die zwischen dem, den Teilgetriebe A zugeordneten Zahnradsatz I und dem, den Teilgetriebe B zugeordneten Zahnradsatz IV (für den 6. Gang) schaltbar ist.

## Patentansprüche

1. Doppelkupplungsgetriebe als Geschwindigkeits-Wechselgetriebe für Kraftfahrzeuge, mit zwei koaxial angeordneten Eingangswellen (14, 16), die über je eine Kupplung (K1, K2) aktivierbar sind, mit einer Abtriebswelle (18) und mit auf den Wellen (14, 16, 18) angeordneten, mittels Schaltkupplungen (38) schaltbaren Zahnradsätzen zur Bildung mehrerer Vorwärtsgänge und eines Rückwärtsganges, wobei die Zahnradsätze in ein Teilgetriebe A mit der einen Eingangswelle (14) und in ein Teilgetriebe B mit der anderen Eingangswelle (18) aufgeteilt sind, **dadurch gekennzeichnet, dass**
nur einem der beiden Teilgetriebe A und B, nämlich dem Teilgetriebe A, eine in zwei Übersetzungsstufen umschaltbare Schalteinheit, insbesondere ein Planetengetriebe (60), vor- oder nachgeschaltet ist, die ein Eingangselement (62), ein Ausgangselement (64) und ein Übertragungselement (68) aufweist und dass insbesondere
das Übertragungselement (68) zum Schalten der ersten Übersetzungsstufe über eine Bremse (B) festsetzbar ist, und das Übertragungselement (68) zum Schalten der zweiten Übersetzungsstufe über eine separate Kupplung (K3) mit einem der anderen Elemente (62, 64) der Schalteinheit (60) verbindbar ist.

2. Doppelkupplungsgetriebe nach Anspruch 1, **dadurch gekennzeichnet, dass** durch Umschalten zwischen den beiden Übersetzungsstufen der Schalteinheit (60) zwei aufeinanderfolgende Gänge einer Schaltfolge schaltbar sind, und zwar insbesondere unter Last schaltbar sind.

3. Doppelkupplungsgetriebe nach Anspruch 1 oder 2, **dadurch gekennzeichnet, dass** das die Schalteinheit (60), insbesondere über die separate Kupplung (K3), in eine 1:1-Übersetzungsstufe umschaltbar ist.

4. Doppelkupplungsgetriebe nach einem der vorhergehenden Ansprüche, **dadurch gekennzeichnet, dass** das Eingangselement (62) einer als Planetengetriebe gebildeten Schalteinheit (60) ein Hohlrad ist, dass das Ausgangselement (64) ein Planetenräder (66) tragender Steg ist und dass das Übertragungselement (68) ein mit den Planetenrädern (66) kämmendes Sonnenrad ist, das über die Bremse (B) festsetzbar ist oder über die separate Kupplung (K3) mit einem der anderen Elemente (62, 64) des Planetengetriebes verbindbar ist.

5. Doppelkupplungsgetriebe nach Anspruch 4, **dadurch gekennzeichnet, dass** die separate Kupplung (K3) zwischen dem antreibenden Hohlrad (62) und dem Sonnenrad (68) vorgesehen ist.

6. Doppelkupplungsgetriebe nach Anspruch 4 oder 5, **dadurch gekennzeichnet, dass** die Bremse (B) und die separate Kupplung (K3) auf einer gemeinsamen Hohlwelle (70) mit dem Sonnenrad (68) angeordnet sind.

7. Doppelkupplungsgetriebe nach einem der vorhergehenden Ansprüche, **dadurch gekennzeichnet, dass** das Wechselgetriebe (12) acht Vorwärtsgänge aufweist, von denen der erste und zweite Vorwärtsgang (1/2), der vierte und fünfte Vorwärtsgang (4/5) und der siebte und achte Vorwärtsgang (7/8) dem Teilgetriebe A mit der vor- oder nachgeschalteten Schalteinheit (60) und der dritte und sechste Vorwärtsgang (3, 6) dem Teilgetriebe B zugeordnet sind.

8. Doppelkupplungsgetriebe nach einem der Ansprüche 1 bis 6, **dadurch gekennzeichnet, dass** das Wechselgetriebe (12) neun Vorwärtsgänge aufweist, von denen der zweite und dritte Vorwärtsgang (2/3), der fünfte und sechste Vorwärtsgang (5/6) und der achte und neunte Vorwärtsgang (8/9) dem Teilgetriebe A mit der vor- oder nachgeschalteten Schalteinheit (60) zugeordnet sind, und der erste, vierte und siebte Vorwärtsgang (1/4/7) dem Teilgetriebe B zugeordnet sind.

9. Doppelkupplungsgetriebe nach einem der vorhergehenden Ansprüche, **dadurch gekennzeichnet, dass** dem Teilgetriebe A mit der vorgeschalteten Schalteinheit (60) ein Zahnradsatz mit einem Zwischenzahnrad zur Darstellung von zwei Rückwärtsgängen (R1, R2) zugeordnet ist.

10. Doppelkupplungsgetriebe nach einem der Ansprüche 1 bis 8, **dadurch gekennzeichnet, dass** der Zahnradsatz mit Zwischenzahnrad zur Bildung des Rückwärtsganges (R) im Teilgetriebe B angeordnet ist.

11. Schaltvorrichtung nach einem der vorhergehenden Ansprüche, **dadurch gekennzeichnet, dass** der Zahnradsatz (I) des ersten Ganges und der Zahnradsatz (R) des Rückwärtsganges in unterschiedlichen Teilgetrieben A, B angeordnet sind.

12. Doppelkupplungsgetriebe nach einem der vorhergehenden Ansprüche, **dadurch gekennzeichnet, dass** eine der Schaltkupplungen (38) des Doppelkupplungsgetriebes zwischen einem, dem Teilgetriebe A zugeordneten Zahnradsatz und einem, dem Teilgetriebe B zugeordneten Zahnradsatz schaltbar ist.

## Claims

1. Double clutch transmission as a change-speed transmission for motor vehicles, having two coaxially arranged input shafts (14, 16) which are able to be activated in each case via one coupling (K1, K2), having an output shaft (18) and having gearwheel sets arranged on the shafts (14, 16, 18) which are switchable by means of clutch couplings (38) for forming several forward gears and a reverse gear, wherein the gearwheel sets are divided into a sub-transmission A having the one input shaft (14) and into a sub-transmission B having the other input shaft (18), **characterised in that**
a switch unit, in particular a planetary gear mechanism (60), able to be switched over into two transmission stages, is connected upstream or downstream of only one of the two sub-transmissions A and B, specifically the sub-transmission A, which switch unit has an input element (62), an output element (64) and a transmission element (68) and that in particular
the transmission element (68) is able to be fixed for switching the first transmission stage via a brake (B), and the transmission element (68) for switching the second transmission stage is connectable via a separate coupling (K3) with one of the other elements (62, 64) of the switch unit (60).

2. Double clutch transmission according to claim 1, **characterised in that** by means of switching between the two transmission stages of the switch unit (60) two successive gears of a gear sequence can be switched, and can in particular be switched under load.

3. Double clutch transmission according to claim 1 or 2, **characterised in that** the switch unit (60) is switchable into a 1:1 transmission stage, in particular via the separate coupling (K3).

4. Double clutch transmission according to any of the preceding claims, **characterised in that** the input element (62) is a hollow wheel of a switch unit (60) formed as a planetary gear mechanism, that the output element (64) is a rib bearing planetary gears (66) and that the transmission element (68) is a sun gear meshing with the planetary gears (66), which sun gear can be fixed via the brake (B) or can be connected via the separate coupling (K3) with one of the other elements (62, 64) of the planetary gear mechanism.

5. Double clutch transmission according to claim 4, **characterised in that** the separate coupling (K3) is provided between the driving hollow wheel (62) and the sun wheel (68).

6. Double clutch transmission according to claim 4 or 5, **characterised in that** the brake (B) and the separate coupling (K3) are arranged on a shared hollow shaft (70) having the sun wheel (68).

7. Double clutch transmission according to any of the preceding claims, **characterised in that** the change-speed transmission (12) has eight forward gears, of which the first and second forward gears (1/2), the fourth and fifth forward gears (4/5) and the seventh and eighth forwards gears (7/8) are assigned to the sub-transmission A having the switch unit (60) connected upstream or downstream and the third and sixth forward gears (3, 6) are assigned to the sub-transmission B.

8. Double clutch transmission according to any of claims 1 to 6, **characterised in that** the change-speed transmission (12) has nine forward gears, of which the second and third forward gears (2/3), the fifth and sixth forward gears (5/6) and the eighth and ninth forward gears (8/9) are assigned to the sub-transmission A having the switch unit (60) connected upstream or downstream and the first, fourth and seventh forward gears (1/4/7) are assigned to the sub-transmission B.

9. Double clutch transmission according to any of the preceding claims, **characterised in that** a gearwheel set having an intermediate gearwheel for representing two reverse gears (R1, R2) is assigned to the sub-transmission A having the switch unit (60) connected upstream.

10. Double clutch transmission according to any of claims 1 to 8, **characterised in that** the gearwheel set having an intermediate gearwheel for forming the reverse gear (R) is arranged in sub-transmission B.

11. Switching device according to any of the preceding claims, **characterised in that** the gearwheel set (I) of the first gear and the gearwheel set (R) of the reverse gear are arranged in different sub-transmissions A, B.

12. Double clutch transmission according to any of the preceding claims, **characterised in that** one of the clutch couplings (38) of the double clutch transmission is able to be switched between a gearwheel set assigned to the sub-transmission A and a gearwheel set assigned to the sub-transmission B.

## Revendications

1. Transmission à double embrayage comme boîte de vitesses pour véhicules automobiles, avec deux arbres d'entrée (14, 16) agencés coaxiaux, qui sont activables chacun par l'intermédiaire d'un accouplement (K1, K2), avec un arbre de sortie (18) et avec des jeux d'engrenages agencés sur les arbres (14, 16, 18), commutables au moyen d'embrayages (38) et destinés à former plusieurs rapports en marche avant et un rapport en marche arrière, dans lequel les jeux d'engrenages sont divisés en une transmission partielle A avec l'arbre d'entrée (14) et une transmission partielle B avec l'autre arbre d'entrée (18),
**caractérisée en ce qu'**une unité de commutation commutable dans deux niveaux de démultiplication, en particulier un engrenage planétaire (60), qui comporte un élément d'entrée (62), un élément de sortie (64) et un élément de transmission (68), est placée en amont ou en aval seulement d'une des deux transmissions partielles A et B, à savoir la transmission partielle A, et **en ce que** l'élément de transmission (68) en particulier peut être immobilisé par l'intermédiaire d'un frein (B) pour commuter le premier niveau de démultiplication et l'élément de transmission (68) peut être relié par l'intermédiaire d'un accouplement (K3) séparé à l'un des autres éléments (62, 64) de l'unité de commutation (60) pour commuter le deuxième niveau de démultiplication.

2. Transmission à double embrayage selon la revendication 1, **caractérisée en ce que**, par la commutation entre les deux niveaux de démultiplication de l'unité de commutation (60), deux rapports successifs d'une séquence de commutation peuvent être commutés, et ce en particulier en charge.

3. Transmission à double embrayage selon la revendication 1 ou 2, **caractérisée en ce que** l'unité de commutation (60) peut être commutée dans un niveau de démultiplication 1:1, en particulier par l'intermédiaire de l'accouplement (K3) séparé.

4. Transmission à double embrayage selon l'une quelconque des revendications précédentes, **caractérisée en ce que** l'élément d'entrée (62) d'une unité de commutation (60) formée comme un engrenage planétaire est une couronne, **en ce que** l'élément de sortie (64) est une traverse portant des roues satellites (66) et **en ce que** l'élément de transmission (68) est une roue solaire, s'engrenant avec les roues satellites (66), qui peut être immobilisée par l'intermédiaire du frein (B) ou être reliée à l'un des autres éléments (62, 64) de l'engrenage planétaire par l'intermédiaire de l'accouplement (K3) séparé.

5. Transmission à double embrayage selon la revendication 4, **caractérisée en ce que** l'accouplement (K3) séparé est prévu entre la couronne (62) motrice et la roue solaire (68).

6. Transmission à double embrayage selon la revendication 4 ou 5, **caractérisée en ce que** le frein (B) et l'accouplement (K3) séparé sont agencés sur un arbre creux commun (70) avec la roue solaire (68).

7. Transmission à double embrayage selon l'une quelconque des revendications précédentes, **caractérisée en ce que** la boîte de vitesses (12) a huit rapports en marche avant parmi lesquels le premier et le deuxième rapport en marche avant (1/2), le quatrième et le cinquième rapport en marche avant (4/5) et le septième et le huitième rapport en marche avant (7/8) sont associés à la transmission partielle A avec l'unité de commutation (60) placée en amont ou en aval et le troisième et le sixième rapport en marche avant (3/6) sont associés à la transmission partielle B.

8. Transmission à double embrayage selon l'une quelconque des revendications 1 à 6, **caractérisée en ce que** la boîte de vitesses (12) a neuf rapports en marche avant parmi lesquels le deuxième et le troisième rapport en marche avant (2/3), le cinquième et le sixième rapport en marche avant (5/6) et le huitième et le neuvième rapport en marche avant (8/9) sont associés à la transmission partielle A avec l'unité de commutation (60) placée en amont ou en aval et le premier, le quatrième et le septième rapport en marche avant (1/4/7) sont associés à la transmission partielle B.

9. Transmission à double embrayage selon l'une quelconque des revendications précédentes, **caractérisée en ce qu'**un jeu d'engrenages avec un engrenage intermédiaire pour la représentation de deux rapports en marche arrière (R1, R2) est associé à la transmission partielle A avec l'unité de commutation (60) placée en amont.

10. Transmission à double embrayage selon l'une quelconque des revendications 1 à 8, **caractérisée en ce que** le jeu d'engrenages avec engrenage intermédiaire pour la formation du rapport en marche arrière (R) est agencé dans la transmission partielle B.

11. Transmission à double embrayage selon l'une quelconque des revendications précédentes, **caractérisée en ce que** le jeu d'engrenages (I) du premier rapport et le jeu d'engrenages (R) du rapport en marche arrière sont agencés dans des transmissions partielles A, B différentes.

12. Transmission à double embrayage selon l'une quelconque des revendications précédentes, **caractérisée en ce que** l'un des embrayages (38) de la transmission à double embrayage peut être commuté entre un jeu d'engrenages associé à la transmission partielle A et un jeu d'engrenages associé à la transmission partielle B.
